# EUROPEAN PATENT SPECIFICATION

(11) **EP 4 272 297 B1**
(45) Date of publication and mention of the grant of the patent: **07.10.2026**
(21) Application number: 21851864.5
(22) Date of filing: 30.12.2021
(51) Int. Cl.: H02K 1/14, H02K 15/06, H02K 3/24

(54) **STATOR WITH CLOSED SLOTS WITH A FLUID INJECTION COOLING SYSTEM FOR AN ELECTRIC MACHINE AND ELECTRIC MACHINE COMPRISING SAID STATOR**
STATOR MIT GESCHLOSSENEN NUTEN MIT EINEM FLUIDINJEKTIONSKÜHLSYSTEM FÜR EINE ELEKTRISCHE MASCHINE UND ELEKTRISCHE MASCHINE MIT DIESEM STATOR
STATOR À FENTES FERMÉES DOTÉ D'UN SYSTÈME DE REFROIDISSEMENT PAR INJECTION DE FLUIDE POUR UNE MACHINE ÉLECTRIQUE ET MACHINE ÉLECTRIQUE COMPRENANT LEDIT STATOR

(43) Date of publication of application: 08.11.2023
(73) Proprietor: Mavel edt S.p.A., 11026 Pont Saint Martin (AO) (IT)
(72) Inventor: FAVRE, Luca, 11026 PONT SAINT MARTIN (IT); BETTONI, Davide, 11026 PONT SAINT MARTIN (IT)
(74) Representative: Garavelli, Paolo
(86) International application number: PCT/IT2021/050438
(87) International publication number: WO 2022/144945

(56) References cited:
- EP-A1- 3 007 319
- WO-A1-2020/174187
- US-A1- 2011 309 780
- US-A1- 2019 115 794
- US-A1- 2019 222 091

## Description

The present invention relates to a stator for an electric machine with a fluid injection cooling system and to an electric machine comprising said stator.

In particular, the invention refers to a stator for a closed-slot rotating electric machine, preferably with a continuous winding made using a metal blade, comprising a cooling system with oil injection directly into the closed slots, in particular into channels obtained close to said slots. Known electric machines include a fixed part, the stator, and a moving part, the rotor, coaxially arranged one inside the other. Typically, the rotor comprises a pack of laminations fixed on a rotation shaft, and is inserted inside the stator which includes an electric winding capable of generating a magnetic field that causes the rotor to rotate.

The stator is generally annular in shape and includes a plurality of radial slots, inside which the electric winding is obtained.

From International Patent Application WO2016188764, an electric machine with a stator with closed slots is known, for example a synchronous electric motor with reluctance assisted by permanent magnets, which provides a wall for closing the stator slots in correspondence with the rotor, to make closed slots that reduce the problems caused by torque ripple, with associated vibrations and noise.

For the realization of the electric windings of closed-slot stators, it is known to use electric conductors made using strips or continuous wires, or copper strips that are bent in the central part to form hairpin-shaped strips, to be inserted in the stator slots.

The shape and bending angles of the strips vary with the variation of the geometry of the stator and the slots, and with the variation of the winding scheme.

These strips are inserted into the stator slots according to a certain pattern, to obtain the exact number of turns necessary to compose the stator winding.

A problem of known stators is caused by the thermal flux generated by the Joule effect when the winding is crossed by electric current: this heat flux must be evacuated to improve efficiency and prevent damage to the electric machine.

It is known to use cooling systems for electric motors' stators, with oil that circulates in channels obtained in the external part of the stator.

These known cooling systems have the problem that oil circulates in the external part of the stator, distanced from the windings that represent the main heat source of the machine, reducing the efficiency of the heat exchange.

Another problem of known stator cooling systems is requiring to modify the stator in order to obtain the oil circulation channels close to the slots, increasing the design and production complexity.

Documents WO-A1-2020/174187, EP-A1-3 007 319 and US-A1-2019/115794 disclose stators according to the preamble of Claim 1.

Object of the present invention is solving these problems by means of a stator with closed slots for an electric machine and an electric machine comprising said stator which allow to obtain a better efficiency of the electric machine by realizing windings with greater active length, lower costs, better filling of the slots by the winding, also simplifying the production process.

Other objects of the present invention are the following: providing a high heat exchange between the cooling fluid and the motor windings; improving the performance of an electric machine during continuous operations, increasing the performances duration before derating; improving the performance of the electric machine during peak operations, allowing to reach higher values of peak currents; improving globally the electric machine efficiency; possibility of obtaining more powerful motors, with equal dimensions, compared to equivalent versions without the cooling system of the invention; obtaining a cooling system which allows for less assembly and production complexity.

The aforementioned and other objects and advantages of the invention, which will appear from the following description, are achieved with a closed-slot stator for an electric machine and an electric machine comprising such a stator, as those described in the independent claims.

Preferred embodiments of the present invention are the subject matter of the dependent claims.

The present invention will be better described by some preferred embodiments thereof, provided as a non-limiting example, with reference to the attached drawings, in which:

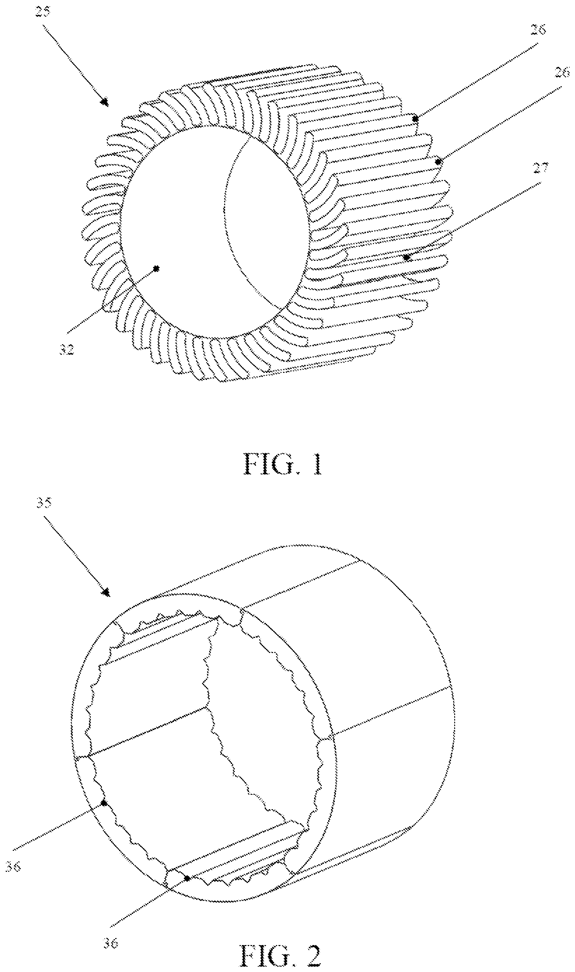

- FIG. 1 shows a perspective view of an internal part of a stator of an electric machine according to the invention;
- FIG. 2 shows a perspective view of an external part of a stator of an electric machine according to the invention;

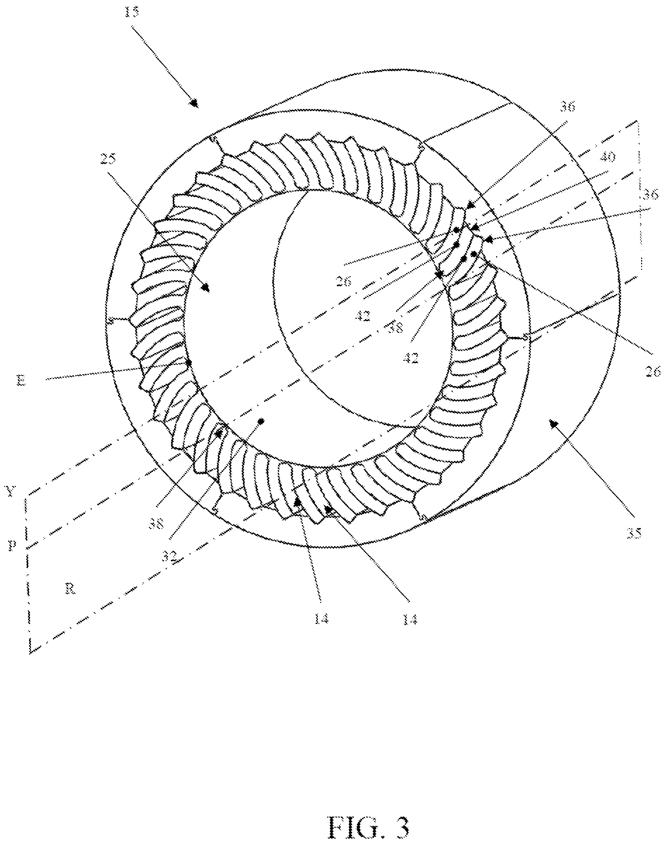

- FIG. 3 shows a perspective view of a stator of an electric machine according to the invention;

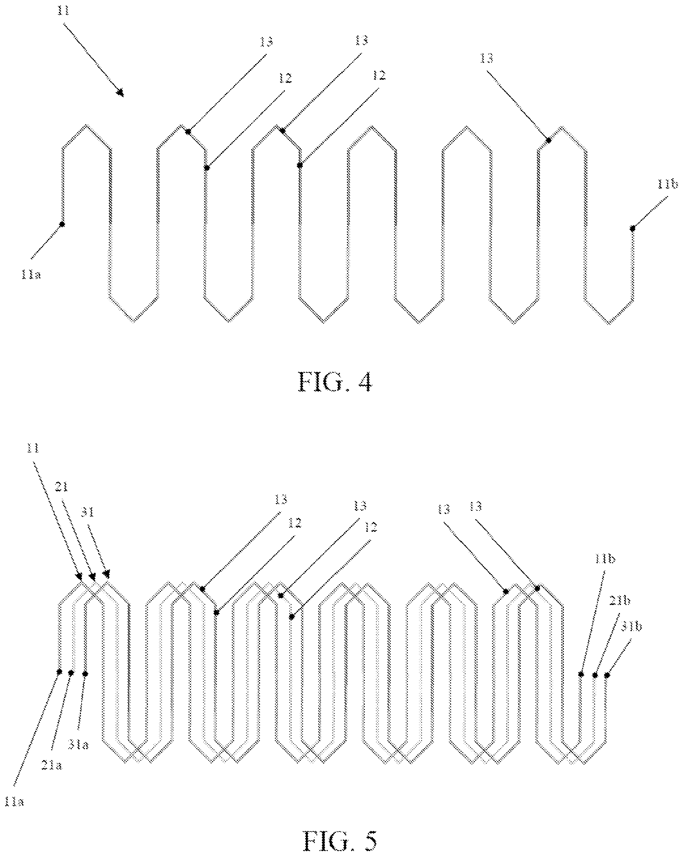

- FIG. 4 shows a view of a continuous winding for a stator of an electric machine according to the invention;
- FIG. 5 shows a view of a plurality of continuous windings for a stator of an electric machine according to the invention;

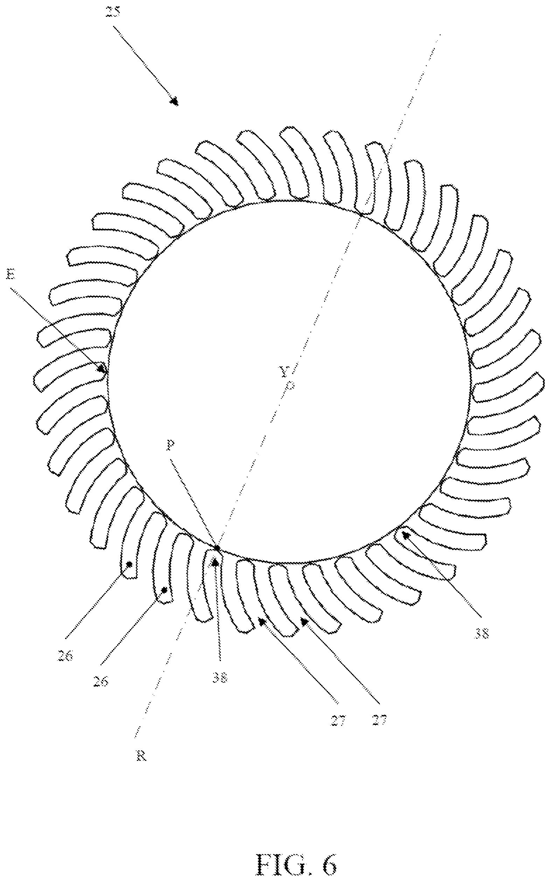

- FIG. 6 shows a schematic front view of an internal part of a stator according to the invention;

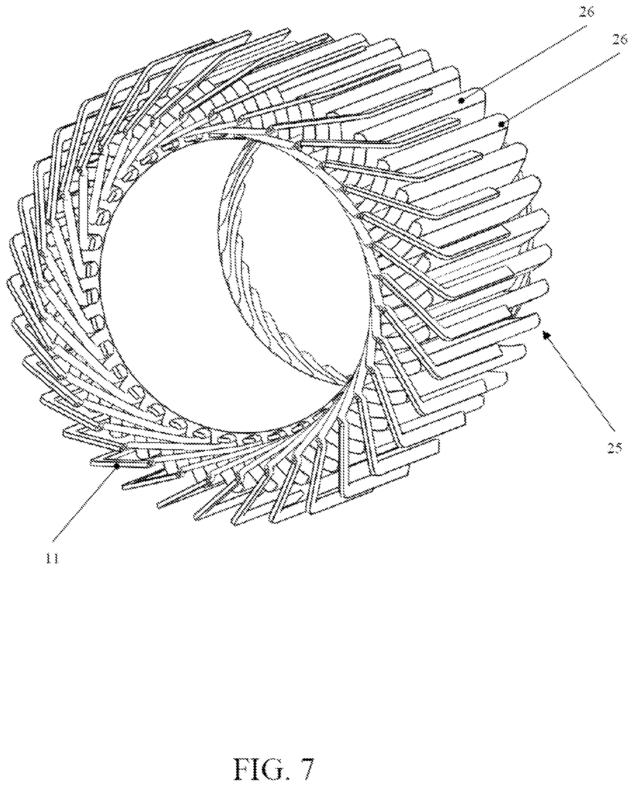

- FIG. 7 shows a perspective view of an internal part of a stator with a continuous winding according to the invention;

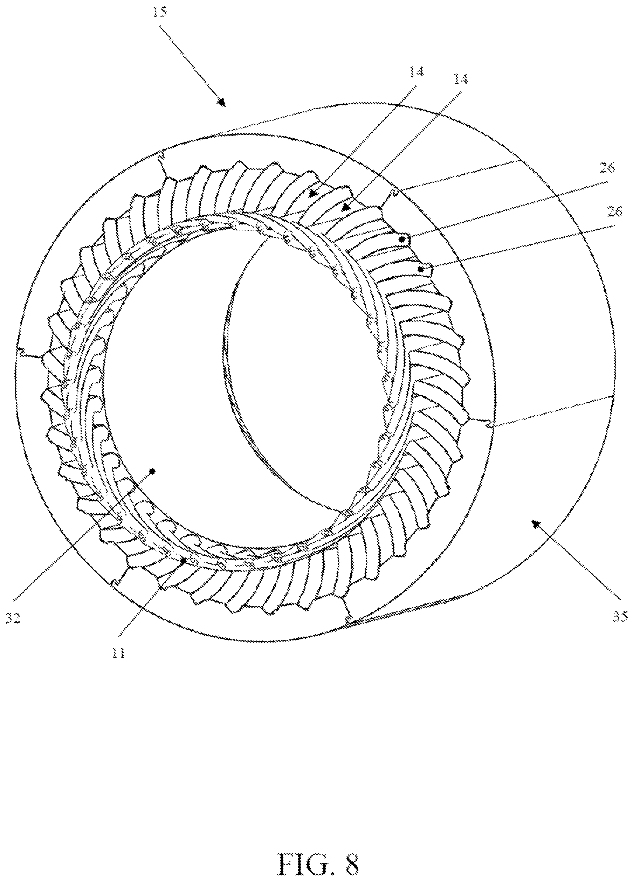

- FIG. 8 shows a perspective view of a stator of an electric machine with a continuous winding according to the invention;

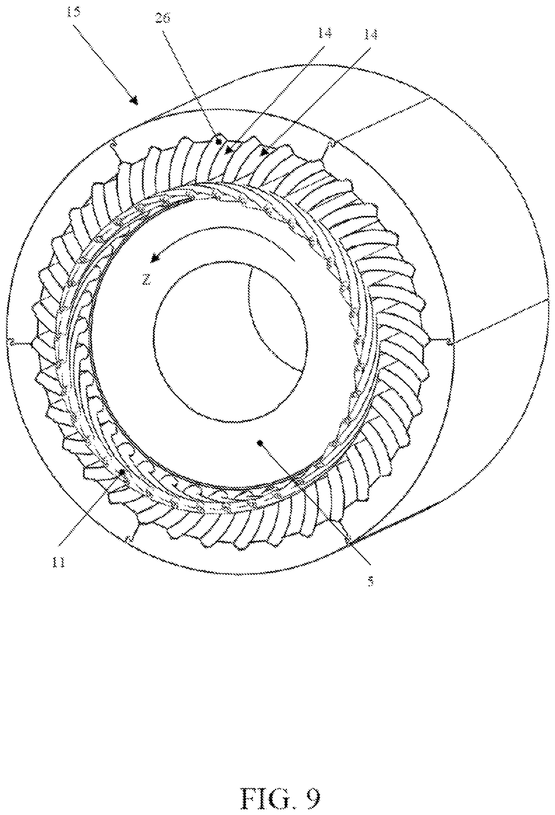

- FIG. 9 shows a perspective view of a rotor and a stator of an electric machine with a continuous winding according to the invention;
- FIG.10 shows a partial schematic front view of a stator according to the invention;
- FIG. 11 shows a schematic front view of a closed slot of a stator according to the invention;

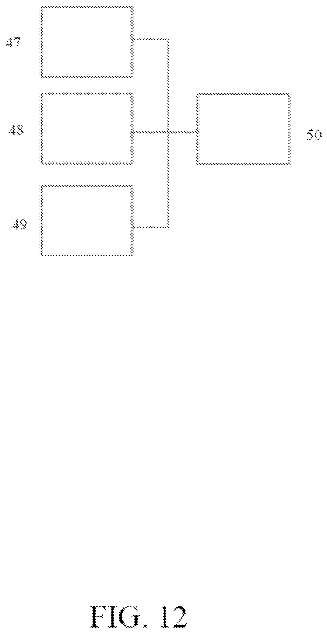

- FIG. 12 shows a block diagram of a closed-slots stator cooling system according to the invention.

With reference to the figures, the stator 15 with closed slots, preferably with continuous winding, will be described below for an electric machine according to the invention, which comprises a first internal stator part 25 comprising a plurality of longitudinal teeth 26, spaced apart by a configured space 27 to make the lower part of the closed slots 14 of the stator, and a second external annular stator part 35, preferably comprising a plurality of seats 36 complementary to the teeth 26 of the first stator part 25 and configured to associate with the first stator part 25, in order to form the closed slots 14 and the stator 15. Preferably, said seats 36 obtained in the second stator part 35 are configured to fit together with the teeth 26 of the first stator part 25, in order to form a plurality of closed slots 14 of the stator, by means of a reciprocal sliding movement of the first internal stator part 25 and of the second external part 35, for example along the direction of the longitudinal Y axis of the stator 15, realizing a coupling, for example dovetail-type or other known type of coupling.

The closed slots 14 are arranged, preferably equidistant from each other, along a cylindrical internal wall 32 of the stator 15 configured to house a rotor 5, and each slot 14 comprises a bottom wall 38 arranged in the direction of the longitudinal Y axis of the stator 15, in proximity of the inner wall 32 at a distance E from said inner wall 32 and an upper wall 40.

Said slots 14 are arranged along the direction of the longitudinal Y axis of the stator 15 and have an asymmetrical conformation with respect to a plane R passing through the longitudinal Y axis of the stator 15 and for a centreline P of the slot 14 in correspondence with the internal wall 32; preferably, the slots 14 have an asymmetrical conformation with respect to a plane R passing through the longitudinal Y axis of the stator 15 and through a centreline P of the bottom wall 38.

Each closed slot 14 of the stator 15 is formed by two side walls 42 of two adjacent teeth 26 made in the first internal stator part 25, by the bottom wall 38 connecting the two adjacent teeth 26 and by the upper wall 40, preferably formed by a wall for connecting two adjacent seats 36 made in the second external stator part 35; for example, the bottom wall 38 has a semi-circular or arched shape.

The side walls 42 of a slot 14 are asymmetrical, in particular with respect to the plane R; the side walls 42 of the groove are concave and have the concavity made in such a way as to optimize the efficiency or operation of the electric machine in a desired operating direction; the concavity faces in a specific direction with respect to a preferred rotation direction Z of the rotor 5.

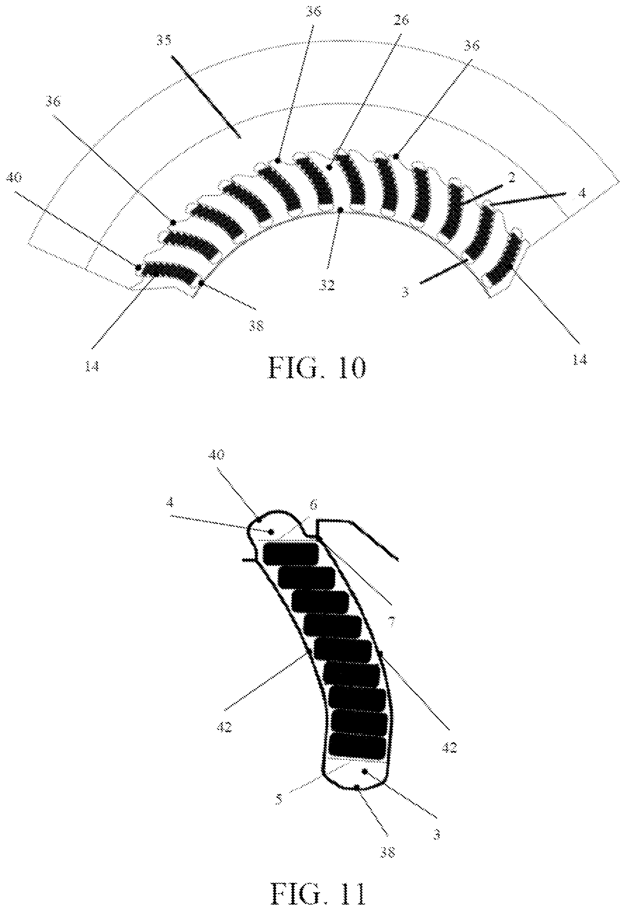

As shown in Figures 10 and 11, the closed-slots stator 15 for an electric machine according to the invention comprises:
- the closed slots 14 into which are inserted the conductors, preferably the straps 2, forming the winding, overlapped starting with a lower conductor (strap) 5 in correspondence with the bottom wall 38 of the slot 14 and ending with an upper conductor (strap) 6 in correspondence with the upper wall 40 of the slot 14,
- a lower channel 3 formed between the lower conductor (strap) 5 and the bottom wall 38 of the slot 14,
- an upper channel 4 formed between the upper conductor (strap) 6 and the upper wall 40 of the slot 14,
said lower 3 and upper 4 channels serving the passage of a cooling fluid, preferably oil, of the stator 15.

The slot 14 comprises a shrinkage and/or a support teeth 7 in correspondence with the bottom wall 38 and/or in correspondence with the upper wall 40 of the slot 14, to prevent inserting the strap 2 in contact with the bottom wall 38 and/or the upper wall 40 and to leave a free space to form the lower 3 and upper 4 channels; preferably the bottom wall 38 and the upper wall 40 of the slot 14 have a semi-circular or arched shape.

In the embodiment of the closed-slots stator 15 of the invention, which comprises the side walls 42 of the slot 14 concave, the slot 14 also comprises micro-channels formed in the space between the conductor 2 and the side walls 42; said additional fluid (oil) passage increases the heat exchange between the cooling fluid and the conductor 2.

The cooling system with fluid injection of the stator 15 with closed slots 14 of the invention comprises a pump 48, a thermostat 47 and known suitable temperature and flow sensors 49 positioned downline of the electric machine 50 in order to make the cooling fluid flow inside the channels 3, 4 at a constant temperature and flow.

Thanks to that, the evacuation of the heat in the stator 15 is very efficient, since it happens directly in contact with the winding conductors that are the main source of heat dissipation of the electric machine.

The cooling system allows to limit the rise of the temperature of the winding during the functioning of the electric machine, limiting the increase in resistivity of the conductor with temperature, reducing the conduction and proximity losses with equal current, compared to equivalent versions without cooling channels.

Advantageously, the efficiency of the electric machine increases considerably and, in the face of lower losses, it is possible to improve performance during continuous operations of the electric motor and to reach higher currents during peak operations. Average power increases, as well as mass power, allowing to obtain lighter machines with equal power compared to equivalent machines without the cooling directed on the windings.

In a preferred embodiment of the invention, the closed-slots stator 15 of the invention comprises a continuous winding comprising at least one strip 11, 21, 31, which in turn comprises a plurality of first sectors 12 connected to each other by a plurality of second sectors 13 alternating with them, said at least one strip 11, 21, 31 being configured to be wound on the first internal stator part 25, positioning the first sectors 12 of the strip 11, 21, 31 in the spaces 27 between the teeth 26. Preferably the first sectors 12 are parallel, each first sector 12 being connected with at least one end thereof to a second sector 13, and the winding comprises three strips 11, 21, 31 alternating with each other.

In a preferred embodiment of the stator 15 with closed slots according to the invention, the second external annular stator part 35 is composed of sectors 45 associated with each other.

Advantageously, the stator 15 with closed slots with cooling system with injection of fluid of the invention allows making windings with lower costs, better filling of the slots by the winding, also simplifying the production process.

In addition, the closed-slot stator with cooling system with fluid injection of the invention allows optimizing the efficiency or operation of an electric machine in a desired operating direction.

## Claims

1. Stator (15) with closed slots comprising:
- a first internal stator part (25) which comprises a plurality of longitudinal teeth (26), spaced by a space (27) configured to form the lower part of the closed slots (14) of the stator;
- a second external stator part (35), configured to form together with the teeth (26) the closed slots (14) and the stator (15);
- a winding comprising at least a conductor (2) configured to be wound in the stator closed slots (14) ;
- the closed slots (14) into which are inserted the conductors (2) forming the winding, overlapped starting with a lower conductor (5) in correspondence with a bottom wall (38) of the slot (14) and ending with an upper conductor (6) in correspondence with an upper wall (40) of the slot (14),
- a lower channel (3) formed between the lower conductor (5) and the bottom wall (38) of the slot (14),
- an upper channel (4) formed between the upper conductor (6) and the upper wall (40) of the slot (14),
said lower (3) and upper (4) channels serving the passage of a cooling fluid of the stator (15);
wherein:
- the closed slot (14) comprises a shrinkage and/or a support teeth (7) in correspondence with the bottom wall (38) and/or in correspondence with the upper wall (40) of the slot (14), to prevent inserting the conductor (2) in contact with the bottom wall (38) and/or the upper wall (40) and to leave a free space to form the lower (3) and upper (4) channels; **characterized in that**
- at least one slot (14) is asymmetrical;
- said at least one slot (14) comprises asymmetrical side walls (42);
- the side walls (42) are concave;
wherein the side walls (42) are asymmetrical and have a concavity facing along a specific direction with respect to a preferred direction (Z) of rotation of the rotor (5).

2. Stator (15) with closed slots according to claim 1, **characterized in that** the bottom wall (38) and the upper wall (40) of the slot (14) are curved or concave.

3. Stator (15) with closed slots according to claim 1, **characterized in that** said at least one slot (14) has an asymmetrical conformation with respect to a plane (R) passing through the longitudinal (Y) axis of the stator (15) and for a centreline (P) of the slot (14) in correspondence with the internal wall (32).

4. Stator (15) with closed slots according to claim 1, **characterized in that** the closed slot (14) also comprises micro-channels formed in the space between the conductor (2) and the side walls (42) to increase the heat exchange between the cooling fluid and the conductor (2).

5. Stator (15) with closed slots according to any one of the preceding claims, **characterized in that** it comprises a plurality of closed slots (14) arranged along an internal wall (32) of the stator (15) configured to house a rotor (5), and each slot (14) comprises a bottom wall (38) arranged in the direction of the longitudinal axis (Y) of the stator (15), in proximity to the inner wall (32).

6. Stator (15) with closed slots according to claim 5, **characterized in that** said slots (14) and/or said side walls (42) have an asymmetrical conformation with respect to a plane (R) passing through the longitudinal axis (Y) of the stator (15) and through a centreline (P) of the bottom wall (38).

7. Stator (15) with closed slots according to any one of the preceding claims, **characterized in that** it comprises:
- a second external annular stator part (35) comprising a plurality of seats (36) complementary to the teeth (26) of the first stator part (25) and configured to associate with the teeth (26) in order to form the closed slots (14) and the stator (15) ;
- a continuous winding comprising at least one strip (11, 21, 31) configured to be wound on the first internal stator part (25) in the spaces (27) between the teeth (26).

8. Stator (15) with closed slots according to any one of the preceding claims, **characterized in that** it comprises at least one strip (11, 21, 31) comprising a plurality of first sectors (12) connected together by a plurality of second sectors (13) alternating with them, said at least one strip (11, 21, 31) being configured to be wound on the first internal stator part (25) by positioning the first sectors (12) in the spaces (27) between the teeth (26).

9. Stator (15) with closed slots according to claims 7 or 8, **characterized in that** the second external stator part (35) is composed of sectors (45) associated with each other.

10. Electric machine comprising a stator (15) with closed slots according to any one of claims 1 to 9.

11. Cooling system of a stator (15) with closed slots (14) according to any one of the claims 1 to 9, comprising a pump (48), a thermostat (47) and temperature and flow sensors (49) positioned downline of the electric machine according to claim 10 in order to make the cooling fluid flow inside the channels (3, 4) at a constant temperature and flow.

## Patentansprüche

1. Stator (15) mit geschlossenen Schlitzen, bestehend aus:
- ein erstes inneres Statorteil (25) mit einer Vielzahl von Längszähnen (26), die durch einen Zwischenraum (27) voneinander getrennt sind, der so konfiguriert ist, dass er den unteren Teil der geschlossenen Schlitze (14) des Stators bildet;
- ein zweites äußeres Statorteil (35), das so konfiguriert ist, dass es die geschlossenen Schlitze (14) und den Stator (15) mit den Zähnen (26) bildet;
- eine Wicklung mit mindestens einem Leiter (2), der so konfiguriert ist, dass er in den geschlossenen Nuten (14) des Stators gewickelt werden kann;
- die geschlossenen Schlitze (14), in die die Leiter (2) der Wicklung eingeführt werden, die übereinander angeordnet sind, beginnend mit einem unteren Leiter (5) an der unteren Wand (38) des Schlitzes (14) bis hin zu einem oberen Leiter (6) an der oberen Wand (40) des Schlitzes (14);
- ein unterer Kanal (3), der zwischen dem unteren Leiter (5) und der Bodenwand (38) des Schlitzes (14) ausgebildet ist;
- ein oberer Kanal (4), der zwischen dem oberen Leiter (6) und der oberen Wand (40) des Schlitzes (14) ausgebildet ist;
wobei die unteren (3) und oberen (4) Kanäle für den Durchfluss eines Statorkühlmittels (15) verwendet werden;
in dem:
- der geschlossene Schlitz (14) weist eine Verengung und/oder einen Stützzahn (7) an der unteren Wand (38) und/oder der oberen Wand (40) des Schlitzes (14) auf, um zu verhindern, dass der Leiter (2) die untere Wand (38) und/oder die obere Wand (40) berührt, und um einen freien Raum für die Bildung der unteren (3) und oberen (4) Kanäle zu schaffen;
**gekennzeichnet durch** die Tatsache, dass
- mindestens ein Slot (14) ist asymmetrisch;
- sagte, dass mindestens ein Hohlraum (14) asymmetrische Seitenwände (42) aufweist;
- die Seitenwände (42) sind konkav;
bei denen die Seitenwände (42) asymmetrisch sind und eine konkave Ausbuchtung aufweisen, die in eine bestimmte Richtung in Bezug auf eine bevorzugte Drehrichtung (Z) des Rotors (5) zeigt.

2. Stator (15) mit geschlossenen Schlitzen nach Anspruch 1, **dadurch gekennzeichnet, dass** die untere Wand (38) und die obere Wand (40) des geschlossenen Schlitzes (14) eine gekrümmte oder bogenförmige Gestalt aufweisen.

3. Stator (15) mit geschlossenen Schlitzen nach Anspruch 1, **dadurch gekennzeichnet, dass** der mindestens eine Schlitz (14) eine asymmetrische Form in Bezug auf eine Ebene (R) aufweist, die durch die Längsachse (Y) des Stators (15) und durch eine Linie (P) des Mittelpunkts des Schlitzes (14) in Korrespondenz mit der Innenwand (32) verläuft.

4. Stator (15) mit geschlossenen Schlitzen nach Anspruch 1, **dadurch gekennzeichnet, dass** der geschlossene Schlitz (14) auch Mikrokanäle aufweist, die im Raum zwischen dem Leiter (2) und den Seitenwänden (42) ausgebildet sind, um den Wärmeaustausch zwischen dem Kühlmedium und dem Leiter (2) zu erhöhen.

5. Stator (15) mit geschlossenen Schlitzen nach einem der vorhergehenden Ansprüche, **dadurch gekennzeichnet, dass** er eine Vielzahl von geschlossenen Schlitzen (14) umfasst, die entlang einer Innenwand (32) des Stators (15) angeordnet sind, welche zur Aufnahme eines Rotors (5) dient, und jeder Schlitz (14) eine Bodenwand (38) aufweist, die in Richtung der Längsachse (Y) des Stators (15) in der Nähe der Innenwand (32) angeordnet ist.

6. Stator (15) mit geschlossenen Schlitzen nach Anspruch 5, **dadurch gekennzeichnet, dass** die Schlitze (14) und/oder die Seitenwände (42) eine asymmetrische Form in Bezug auf eine Ebene (R) aufweisen, die durch die Längsachse (Y) des Stators (15) und durch eine Mittellinie (P) der Bodenwand (38) verläuft.

7. Stator (15) mit geschlossenen Schlitzen nach einem der vorhergehenden Ansprüche, **dadurch gekennzeichnet, dass** er Folgendes umfasst:
- ein zweites äußeres ringförmiges Statorteil (35), das eine Vielzahl von Sitzen (36) umfasst, die komplementär zu den Zähnen (26) des ersten Statorteils (25) sind und so konfiguriert sind, dass sie mit den Zähnen (26) zusammenpassen, um die geschlossenen Schlitze (14) und den Stator (15) zu bilden;
- eine durchgehende Wicklung, bestehend aus mindestens einem Streifen (11, 21, 31), der so konfiguriert ist, dass er auf dem ersten inneren Statorteil (25) in den Zwischenräumen (27) zwischen den Zähnen (26) aufgewickelt werden kann.

8. Stator (15) mit geschlossenen Schlitzen nach einem der vorhergehenden Ansprüche, **dadurch gekennzeichnet, dass** er mindestens einen Streifen (11, 21, 31) umfasst, der aus einer Vielzahl von ersten Sektoren (12) besteht, die durch eine Vielzahl von zweiten Sektoren (13) miteinander verbunden sind, die sich abwechseln. Dieser mindestens eine Streifen (11, 21, 31) ist so konfiguriert, dass er auf den ersten inneren Statorteil (25) gewickelt werden kann, indem die ersten Sektoren (12) in die Zwischenräume (27) zwischen den Zähnen (26) positioniert werden.

9. Stator (15) mit geschlossenen Schlitzen nach Anspruch 7 oder 8, **dadurch gekennzeichnet, dass** der zweite äußere Statorteil (35) aus miteinander verriegelten Sektoren besteht.

10. Elektrische Maschine mit einem Stator (15) mit geschlossenen Nuten nach einem der Ansprüche 1 bis 9.

11. Kühlsystem für einen Stator (15) mit geschlossenen Schlitzen (14) nach einem der Ansprüche 1 bis 9, umfassend eine Pumpe (48), einen Thermostat (47) und Temperatur- und Durchflusssensoren (49), die stromabwärts der elektrischen Maschine nach Anspruch 10 angeordnet sind, um sicherzustellen, dass das Kühlmedium mit konstanter Temperatur und konstanter Durchflussrate durch die Kanäle (3, 4) fließt.

## Revendications

1. Stator (15) avec encoches fermées comprenant:
- une première partie interne du stator (25) comprenant une pluralité de dents longitudinales (26), espacées par un espace (27) configuré pour former la partie inférieure des fentes fermées (14) du stator;
- une deuxième partie de stator externe (35) configurée pour former les fentes fermées (14) et le stator (15) avec les dents (26);
- un enroulement comprenant au moins un conducteur (2) configuré pour être enroulé dans les encoches fermées (14) du stator;
- les fentes fermées (14) dans lesquelles sont insérés les conducteurs (2) qui forment l'enroulement, superposés en partant d'un conducteur inférieur (5) en correspondance avec une paroi inférieure (38) de la fente (14), jusqu'à un conducteur supérieur (6) en correspondance avec une paroi supérieure (40) de la fente (14);
- un canal inférieur (3) formé entre le conducteur inférieur (5) et la paroi inférieure (38) de la fente (14);
- un canal supérieur (4) formé entre le conducteur supérieur (6) et la paroi supérieure (40) de la fente (14);
lesdits canaux inférieur (3) et supérieur (4) étant utilisés pour le passage d'un fluide de refroidissement du stator (15);
dans lequel:
- la fente fermée (14) comprend un rétrécissement et/ou une dent de support (7) sur la paroi inférieure (38) et/ou la paroi supérieure (40) de la fente (14), pour empêcher l'insertion du conducteur (2) en contact avec la paroi inférieure (38) et/ou la paroi supérieure (40) et pour laisser un espace libre afin de créer les canaux inférieur (3) et supérieur (4);
**caractérisé par le fait que**
- au moins un emplacement (14) est asymétrique;
- a déclaré qu'au moins une cavité (14) comprend des parois latérales asymétriques (42);
- les parois latérales (42) sont concaves;
dans lequel les parois latérales (42) sont asymétriques et présentent une concavité orientée dans une direction spécifique par rapport à une direction de rotation préférée (Z) du rotor (5).

2. Stator (15) à fentes fermées selon la revendication 1, **caractérisé en ce que** la paroi inférieure (38) et la paroi supérieure (40) de la fente fermée (14) ont une forme incurvée ou arquée.

3. Stator (15) à fentes fermées selon la revendication 1, **caractérisé en ce que** ladite au moins une fente (14) a une forme asymétrique par rapport à un plan (R) passant par l'axe longitudinal (Y) du stator (15) et par une ligne (P) du centre de la fente (14) en correspondance avec la paroi interne (32).

4. Stator (15) à fentes fermées selon la revendication 1, **caractérisé en ce que** la fente fermée (14) comprend également des microcanaux formés dans l'espace entre le conducteur (2) et les parois latérales (42) pour augmenter l'échange de chaleur entre le fluide de refroidissement et le conducteur (2).

5. Stator (15) à fentes fermées selon l'une quelconque des revendications précédentes, **caractérisé en ce qu'**il comprend une pluralité de fentes fermées (14) disposées le long d'une paroi interne (32) du stator (15) configurée pour loger un rotor (5) et chaque fente (14) comprend une paroi inférieure (38) disposée dans la direction de l'axe longitudinal (Y) du stator (15), à proximité de la paroi interne (32).

6. Stator (15) à fentes fermées selon la revendication 5, **caractérisé en ce que** lesdites fentes (14) et/ou lesdites parois latérales (42) ont une forme asymétrique par rapport à un plan (R) passant par l'axe longitudinal (Y) du stator (15) et par une ligne centrale (P) de la paroi inférieure (38).

7. Stator (15) à encoches fermées selon l'une quelconque des revendications précédentes, **caractérisé en ce qu'**il comprend:
- une deuxième partie de stator annulaire externe (35), comprenant une pluralité de sièges (36) complémentaires aux dents (26) de la première partie de stator (25) et configurés pour s'emboîter avec les dents (26) de manière à former les fentes fermées (14) et le stator (15);
- un enroulement continu comprenant au moins une bande (11, 21, 31) configurée pour être enroulée sur la première partie interne du stator (25) dans les espaces (27) entre les dents (26).

8. Stator (15) à fentes fermées selon l' une quelconque des revendications précédentes, **caractérisé en ce qu'**il comprend au moins une bande (11, 21, 31) comprenant une pluralité de premiers secteurs (12) reliés entre eux par une pluralité de seconds secteurs (13) alternant avec ceux-ci, ladite bande (11, 21, 31) étant configurée pour être enroulée sur la première partie interne du stator (25) en positionnant les premiers secteurs (12) dans les espaces (27) entre les dents (26).

9. Stator (15) à fentes fermées selon la revendication 7 ou 8, **caractérisé en ce que** la seconde partie externe du stator (35) est composée de secteurs imbriqués les uns dans les autres.

10. Machine électrique comprenant un stator (15) avec des fentes fermées selon l'une quelconque des revendications 1 à 9.

11. Système de refroidissement pour un stator (15) avec fentes fermées (14) selon l'une quelconque des revendications 1 à 9, comprenant une pompe (48), un thermostat (47) et des capteurs de température et de débit (49) placés en aval de la machine électrique selon la revendication 10 pour faire circuler le fluide de refroidissement à l'intérieur des canaux (3, 4) à une température et un débit constants.
